# EUROPEAN PATENT SPECIFICATION

(11) **EP 2 659 116 B1**
(45) Date of publication and mention of the grant of the patent: **14.10.2015**
(21) Application number: 11809058.8
(22) Date of filing: 28.12.2011
(51) Int. Cl.: F02D 29/04, F02D 29/06, B60R 16/03

(54) **INTEGRATED GENERATOR AND MOTOR PUMP**
INTEGRIERTER GENERATOR UND MOTORPUMPE
GÉNÉRATEUR ET MOTOPOMPE INTÉGRÉS

(30) Priority: 29.12.2010 US 201061428033 P
(43) Date of publication of application: 06.11.2013
(73) Proprietor: Magna Powertrain of America, Inc., Troy, Michigan 48083 (US)
(72) Inventor: GREENE, Darrell F., Bradford Ontario L3Z 3E2 (CA)
(74) Representative: Maiwald Patentanwalts GmbH
(86) International application number: PCT/US2011/067540
(87) International publication number: WO 2012/092344

(56) References cited:
- DE-A1- 19 737 988
- JP-A- 2009 191 724
- US-A1- 2004 025 839
- US-A1- 2006 017 290
- US-A1- 2009 058 373
- US-A1- 2010 026 131

## Description

### FIELD OF THE DISCLOSURE

The present disclosure generally relates to an operable electric-driven pump for use on a vehicle such as an automobile, truck, van, utility, fleet, cargo or the like. More particularly, the present disclosure relates to an improved motor and pump having particular applicability a hybrid-electric vehicle powertrain.

### BACKGROUND

It is generally known to have a power take off from an engine of a vehicle such that the engine drives a generator (or alternator) to generate electricity. The generated electricity can be used to power the electrical systems of the vehicle and can also be supplied to an electric motor. The electric motor can be used for driving various devices, such as a pump. The efficiency and size of the existing electrical motors for operating the pumps for the engine is based and dependent upon the known alternator performance and vehicle voltage levels. Despite these known systems, there long remains a significant need to optimize the cooling or lubrication of systems of the engine by providing variable flow/pressure pumps required to deliver the needs of the engine, independent of engine speed. Further, the long and well known need to make vehicles more fuel efficient continues to increase with the increasing cost of fuel to operate the engine.

Electric motor pumps driven from the vehicle alternator at vehicle level voltage, typically operate at around 12 volts direct current, and use proven technology and an electrical motor and a controller to obtain the existing efficiency level. However, the known electric motor pumps and systems are relatively complicated and include relatively expensive electronics. Further, the known devices are relatively large in size and inefficient when considering the total system and its power draw from the alternator. Accordingly, there long remains a significant need to improve such devices.

DE 19 737 988 A1 discloses a vehicle fuel pump supply system having the features of the preamble of claim 1.

### SUMMARY

In one exemplary embodiment, there is disclosed an engine having an electrically driven pump having a pump speed separate from engine speed. In one particular exemplary embodiment, there is disclosed an engine having an electrical system wherein the motor for the pump is isolated from the existing electrical system of the engine and can be operated at a different voltage than the vehicle and its electrical system. In one particular exemplary embodiment, the generator and motor components are combined to provide power to a pump independent of the vehicle alternator to provide higher voltage to be supplied to the electric motor of the pump than standard voltages used in known vehicle applications.

In one particular exemplary embodiment, there is disclosed a combination motor and pumping system for use in a vehicle, the vehicle including a vehicle electrical system, the combination motor and pumping system includes a secondary electrical generation device in communication with a vehicle engine and adapted to generate and supply electrical power to the combination motor and pumping system^ In the embodiment, the motor is for operating the fluid pump for supplying a fluid to the engine of the vehicle and the motor is in electrical communication with the secondary electrical generation device and wherein the secondary electrical generation device supplies a voltage to the motor of the combination motor and pumping system wherein the supplied voltage is higher than the voltage used in the vehicle electrical system. In the embodiment the secondary electrical generation device is a claw pole generator combined with a brushless rotor for generating a 3-phase voltage source. Further, the combination motor and pumping system is combined with a vehicle engine control unit and the secondary electrical generation device is amplitude controlled by a pulse-width-modulation output from the vehicle engine control unit. Further, the secondary electrical generation device and the motor for operating the fluid pump are combined into a single unit.

In one particular exemplary embodiment, the system and motor are operated wherein the phases of alternating current directly provide motor commutation and phase connections, wiring connections, or both, to change the motor speed of the electric motor of the fluid pump. In another exemplary embodiment an amplitude of an alternating current (AC) signal is used to control the motor of the fluid pump. Further, in another exemplary embodiment of the present invention, the combination motor of fluie pump include a closed feedback loop controller for controlling the motor and pump operation wherein the operation is controlled using any one or more (in any combination) of a motor speed, a coolant temperature, a fluid pressure flow, for controlling the operation of the system.

### BRIEF DESCRIPTION OF THE DRAWINGS

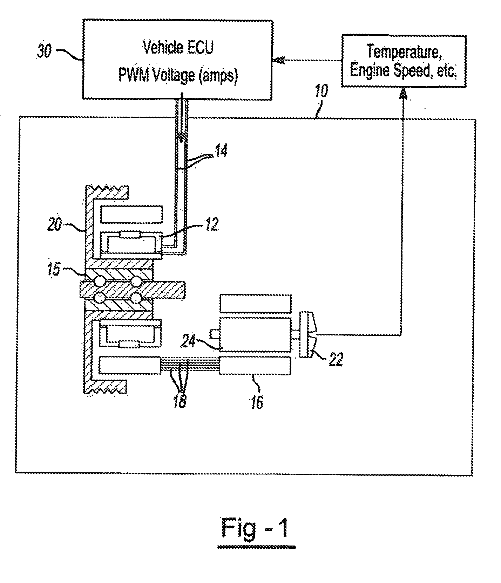

FIG. 1 is a partial, schematic diagram view of an integrated generator and motor pump system according an exemplary embodiment.

### DETAILED DESCRIPTION

A pump may be used in a vehicle for providing a variety of functions including pumping water for the coolant system of the vehicle or pumping oil for the engine and/or transmission among other applications. The present invention contemplates a secondary electrical generation device for use and adapted to generate electrical power for the pumping system (e.g. fluid pump). It is also contemplated that secondary electrical generation device provides power for a motor for operating a fluid pump, the fluid pump for supplying a fluid to the engine of the vehicle, wherein preferably the secondary electrical generation device supplies a voltage to the motor higher than the voltage used in other vehicle electrical system. It is contemplated that the generation device and the motor are combined into a single unit.

Referring to FIG. 1 there is shown a partial, schematic diagram view of a combination generator (e.g. secondary electrical generation device 15) and electric motor 16. In this example, a claw pole generator 12 is combined with a brushless rotor 24, generating a 3-phase voltage source which is preferably amplitude controlled by pulse-width-modulation (PWM) output from vehicle engine control unit (ECU 30), for example via control leads 14. The amplitude controlled 3-phase voltage source preferably drives a brushless inductive motor 16 (e.g. via a multiphase connection 18) such that a load is taken off the vehicle alternator (not shown) and made separately usable. The combination device 10 is preferably in communication with a vehicle motor (not shown) via a pulley system 20 and pumps fluid (flow) via the use of a fluid pump 22.

As such, it should be understood that the present disclosure, as shown in FIG. 1, integrates an electrical generator into the motor and pump (wherein the pump is to be driven by the engine in any known or appropriate manner, as represented by the pulley in FIG. 1) to supply the electrical motor of the pump with a dedicated power source which can be at a higher (or secondary) voltage than existing vehicle voltage and/or can be used to provide a simpler electronic control of the pump. Further, with the integration of the additional electrical generator in the motor of the motor and pump combination, it is anticipated that it will be possible to share windings on common stators or rotors, to share magnetic cores or laminations, and to wind multiple components in single assembly (and operation) to limit and/or avoid discrete generator to motor wiring.

In the one embodiment of FIG. 1, it should be understood that by combining the generator and electric motor for operating a pump (not shown) a much higher than normal voltage can be produced and fed to the electric motor of the pump, allowing the motor to be relatively much smaller than if running off standard vehicle voltage. Further, in this embodiment, the internal generator could run at lower currents than the vehicle alternator, and lower currents still if the voltage is made higher (even up to hundreds of volts or more). In this embodiment, there would be less power loss in the rectifiers and resulting in improved overall system efficiency.

In one embodiment, it should be understood that in the embodiment of FIG. 1, it is possible that either motor speed or, more preferably, the coolant temperature (or, the oil pressure/flow if applied to oil pump) can be used to close a feedback loop (i.e. voltage fluctuations are compensated for) for controlling the operation of the motor and pump.

In one embodiment, it is anticipated that the generator could possibly be left un-rectified (i.e., there would be no diodes to transform AC to DC). Further, if the claw-pole generator is used, the field current could be simply varied by the vehicle ECU to create a single or multiphase AC supply that can be varied in amplitude. Such an AC supply can then be directly fed to the electric motor and be regulated by the vehicle ECU again, in terms of system level output (e.g., temperature, pressure, flow, etc.).

In another embodiment, commutation circuitry, internal ECU controllers and complicated circuitry may possibly avoided if the pump motor can be directly driven by the generator using AC phases to directly provide motor commutation and phase or wiring connections to change motor speed (i.e. # of poles of generator different than motor). In another embodiment, it is possible to use the amplitude of AC signal to control the motor such as an inductive motor (where slip is allowed).

In one embodiment, it is anticipated that cooling of the generator could be provided by a coolant (or oil), if necessary or desired. Additionally, in one exemplary embodiment, it is anticipated that unique layouts may be realized as the pulley connection to the engine and pump impeller need not be co-axial (i.e. may be off-set or at some angle) such that better packaging of the engine may be accomplished.

In alternative exemplary embodiments, very simple embodiments of the integrated generator and motor may be realized using rotating magnetic fields and disc-type motors, including eddy-current type, where slip can be allowed.

In each of the above embodiments, it is believed that the electric fluid pump which uses electricity generated internally by mechanical means for providing a controllable variable flow or pressure of the pump is accomplished. For example, an electric fluid pump having electricity generated internally by mechanical means for providing a controllable variable flow or pressure of the pump is accomplished and/or an electric fluid pump having a generator integrated with a motor for supplying electricity to the motor for providing a controllable variable flow or pressure of the pump is accomplished.

## Claims

1. : A combination motor and pumping system (10) for use in a vehicle, the vehicle including a vehicle electrical system, the system (10) comprising:
a secondary electrical generation device (15) in communication with a vehicle engine, adapted to generate electrical power for the combination motor and pumping system; and
a motor (16) for operating a fluid pump (22), the fluid pump (22) for supplying a fluid to the engine of the vehicle, the motor (16) in electrical communication with the secondary electrical generation device (15);
wherein the secondary electrical generation device (15) supplies a voltage to the motor (16) higher than the standard voltage used in other vehicle electrical system,
the secondary electrical generation device (15) comprises a claw pole generator (12) combined with a brushless rotor (24) for operating a fluid pump (22) and generating a 3-phase voltage source,
the secondary electrical generation device (15) is amplitude controlled by a pulse-width-modulation output from a vehicle engine control unit (30) of the vehicle, and
the secondary electrical generation device (15) and the motor (16) for operating a fluid pump (22) are combined into a single unit.

2. : The system according to claim 1, wherein phases of alternating current directly provide motor commutation and phase connections, wiring connections, or both to change motor speed of the electric motor (16) of the fluid pump (22).

3. : The system according to claim 1 or claim 2, wherein an amplitude of AC signal is used to control the motor (16) of the one or more electric fluid pumps (22).

4. : The system according to any of the preceding claims, wherein motor speed, a coolant temperature, a pressure/flow, and any combination thereof is used to close a feedback loop for controlling the operation of the motor (16) and pump (22).

## Patentansprüche

1. Kombination aus Motor und Pumpensystem (10) zur Verwendung in einem Fahrzeug, wobei das Fahrzeug ein Bordnetz einschließt, wobei das System (10) umfasst:
eine sekundäre Lichtmaschine (15) in Verbindung mit einem Fahrzeugmotor, angepasst, um elektrische Energie für die Kombination aus Motor- und Pumpensystem zu erzeugen; und
einen Motor (16) zum Betrieb einer Fluidpumpe (22), die Fluidpumpe (22) zum Zuführen eines Fluids zu dem Motor des Fahrzeugs, der Motor (16) in elektrischer Kommunikation mit der sekundären Lichtmaschine (15);
wobei die sekundäre Lichtmaschine (15) eine Spannung an den Motor (16) liefert, die höher ist als die Standard-spannung, die in dem anderen Bordnetz verwendet wird,
die sekundäre Lichtmaschine (15) einen Klauenpolgenerator (12) umfasst, in Verbindung mit einem bürstenlosen Rotor (24) zum Betreiben einer Fluidpumpe (22) und Erzeugen einer Drei-Phasen-Spannungsquelle,
die sekundäre Lichtmaschine (15) von einem Impulsbreitenmodulations-Ausgangssignal von einer Fahrzeugmotor-Steuereinheit (30) des Fahrzeugs Amplituden-gesteuert wird, und
die sekundäre Lichtmaschine (15) und der Motor (16) zum Betreiben einer Fluidpumpe (22) zu einer einzigen Einheit kombiniert sind.

2. System nach Anspruch 1, wobei Phasen von Wechselstrom direkt Motorkommutierung und Phasenverbindungen, Kabelverbindungen oder beides versorgen, um die Motordrehzahl des Elektromotors (16) der Fluidpumpe (22) zu ändern.

3. System nach Anspruch 1 oder Anspruch 2, wobei eine Amplitude des Wechselstromsignals verwendet wird, um den Motor (16) der einen oder mehreren elektrischen Fluidpumpen (22) zu steuern.

4. System nach einem der vorangehenden Ansprüche, wobei die Motordrehzahl, Kühlmitteltemperatur, Druck / Fluss und eine beliebige Kombination davon verwendet wird, um eine Rückkopplungsschleife zum Steuern des Betriebs von Motor (16) und Pumpe (22) zu schließen.

## Revendications

1. Système combiné moteur et pompe (10) à utiliser dans un véhicule, le véhicule contenant un système électrique de véhicule, le système (10) comprenant :
un dispositif secondaire générateur d'électricité (15) qui communique avec un moteur de véhicule et qui est apte à produire du courant électrique pour le système combiné moteur et pompe ; et
un moteur (16) pour faire fonctionner une pompe à fluide (22), la pompe à fluide (22) étant destinée à alimenter en fluide le moteur du véhicule, et le moteur (16) étant en communication électrique avec le dispositif secondaire générateur d'électricité (15) ;
étant précisé que le dispositif secondaire générateur d'électricité (15) fournit au moteur (16) une tension qui est supérieure à la tenson standard utilisée dans l'autre système électrique du véhicule,
que le dispositif secondaire générateur d'électricité (15) comprend un générateur à pôles à griffes (12) combiné avec un rotor sans balais (24) pour faire fonctionner une pompe à fluide (22) et produire une source de tension triphasée,
que le dispositif secondaire générateur d'électricité (15) est commandé par amplitude par une sortie à modulation de largeur d'impulsion d'une unité de commande de moteur de véhicule (30) du véhicule, et
que le dispositif secondaire générateur d'électricité (15) et le moteur (16) pour faire fonctionner une pompe à fluide (22) sont combinés en une seule unité.

2. Système selon la revendication 1, dans lequel des phases de courant alternatif fournissent directement la commutation de moteur et les connexions de phase, les connexions de câblage ou les deux pour modifier la vitesse du moteur électrique (16) de la pompe à fluide (22).

3. Système selon la revendication 1 ou la revendication 2, dans lequel une amplitude de signal à courant alternatif est utilisée pour commander le moteur (16) de la ou des pompes électriques à fluide (22).

4. Système selon l'une quelconque des revendications précédentes, dans lequel la vitesse du moteur, une température de liquide de refroidissement, une pression/écoulement et toute combinaison de ceux-ci sont utilisés pour fermer une boucle de régulation pour commander le fonctionnement du moteur (16) et de la pompe (22).
